# EUROPEAN PATENT SPECIFICATION

(11) **EP 1 580 105 B1**
(45) Date of publication and mention of the grant of the patent: **25.04.2007**
(21) Application number: 05006255.3
(22) Date of filing: 22.03.2005
(51) Int. Cl.: B62K 3/10, B62K 5/06, B62K 11/10

(54) **Vehicle**
Fahrzeug
Véhicule

(30) Priority: 22.03.2004 JP 2004083678; 22.03.2004 JP 2004083702; 22.03.2004 JP 2004083706; 22.03.2004 JP 2004083708
(43) Date of publication of application: 28.09.2005
(73) Proprietor: Honda Motor Co., Ltd., Tokyo (JP)
(72) Inventor: Yamaguchi, Ken c/o Honda R&D Co., Ltd., Wako-shi Saitama (JP); Kondo, Nobuyuki c/o Honda R&D Co., Ltd., Wako-shi Saitama (JP); Yahagi, Kunio c/o Honda R&D Co., Ltd., Wako-shi Saitama (JP)
(74) Representative: Rupp, Christian

(56) References cited:
- WO-A-95/19908
- GB-A- 668 803
- GB-A- 786 271
- US-A- 2 194 103
- US-A- 3 504 934
- PATENT ABSTRACTS OF JAPAN vol. 015, no. 160 (M-1105), 22 April 1991 (1991-04-22) & JP 03 031079 A (HIROYUKI YONAHA), 8 February 1991 (1991-02-08)

## Description

### CROSS-REFERENCE TO RELATED APPLICATIONS

This application is based upon and claims the benefit of priority from the prior Japanese Patent Applications No. 2004-083678, No. 2004-083702, No. 2004-083706, and No. 2004-083708 which were filed on March 22, 2004, the entire contents of which are incorporated herein by reference.

### Background of the Invention

### Field of the Invention

The invention relates to a vehicle. The invention especially relates to a vehicle frame, a vehicle swing arm, a vehicle handlebar fixing structure, and an output shaft supporting structure for the vehicle.

### Description of the Related Art

### (Vehicle Frame)

There has been well known in the art to provide the vehicle frame in which one main frame is bent and formed (Refer to US Patent No. 3,504,934, for example.).

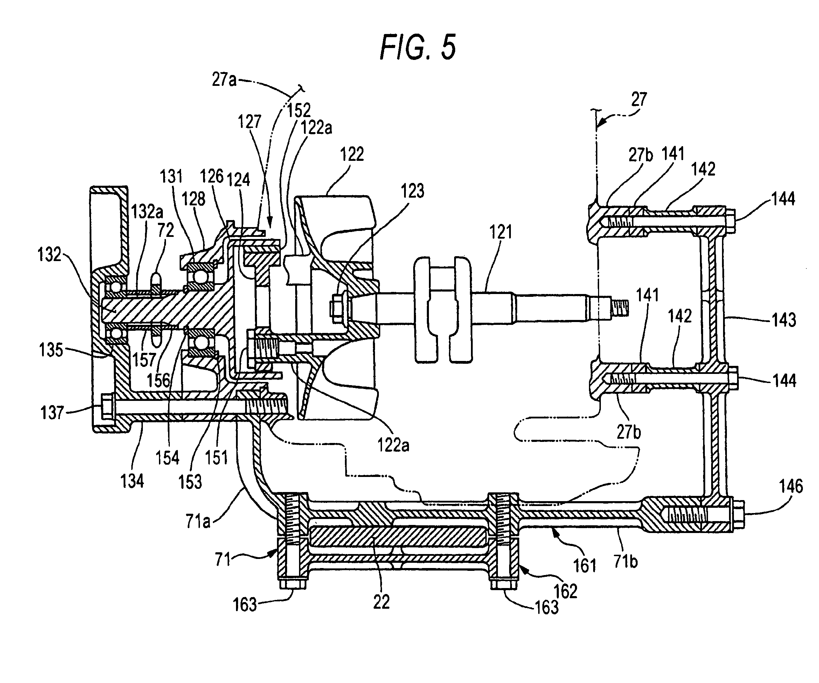

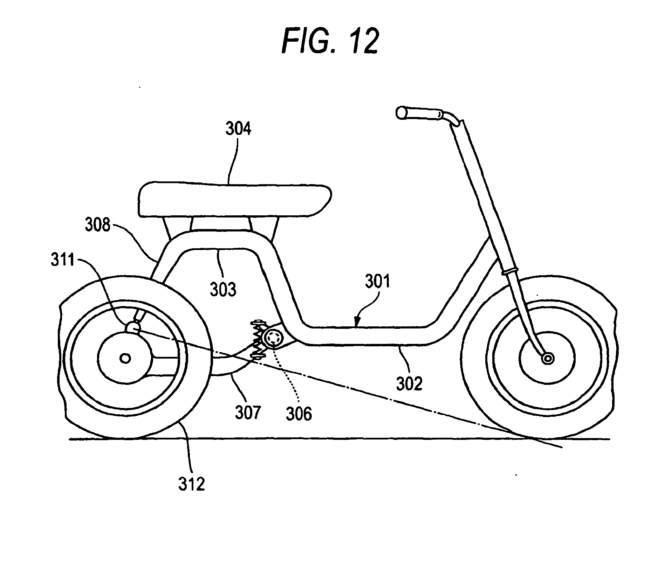

Fig. 5 in US Patent No. 3,504,934 will be described in reference to Fig. 12 as follows. Reference numerals used in Fig. 12 are replaced with other reference numerals.

Fig. 12 is a side elevational view of a vehicle provided with the prior art frame, and this figure shows that this frame is constituted by a lower bent part 302 where one main frame 301 of the vehicle is bent downward and by an upper bent part 303 bent upward, a saddle 304 is fixed to the upper bent part 303, a sub-frame assembly 307 is fixed to the intermediate part between the lower bent part 302 and the upper bent part 303 through a ball joint 306 and at the same time the rear part of the sub-frame assembly 307 is fixed through the ball joint 311 to the rear part of the main frame 301, more particularly the lower end of a downward directed portion 308 and the rear wheel 312 is fixed to the sub-frame assembly 307 through the wheel shaft.

The lower bent part 302 and the upper bent part 303 of the main frame 301 are portions where plural locations of the pipe are bent into an obtuse angle shape. As its manufacturing method, when each of the bent portions is bent into a predetermined angle one by one, the number of forming steps is increased to cause its productivity to be deteriorated. If the number of bending locations is reduced, a bending shape is made simple and the similar downward protruding portion and the similar upward protruding portion are formed, its productivity could be improved. In addition, there is provided one main frame 301, so that it is desirable that its strength and rigidity are higher.

Further, when the main frame 301 is not covered by a cover but entirely exposed outside, or a part of the main frame 301 is covered by the cover to cause it to be partly exposed outside, an outer appearance of the main frame 301 provides a preferable feeling to its owner, and its preferable value as a commodity can be increased.

### (Vehicle Swing Arm)

There has been well known in the art to provide a swing arm comprised of a leaf spring (Refer to US Patent No. 4,405,027, for example.).

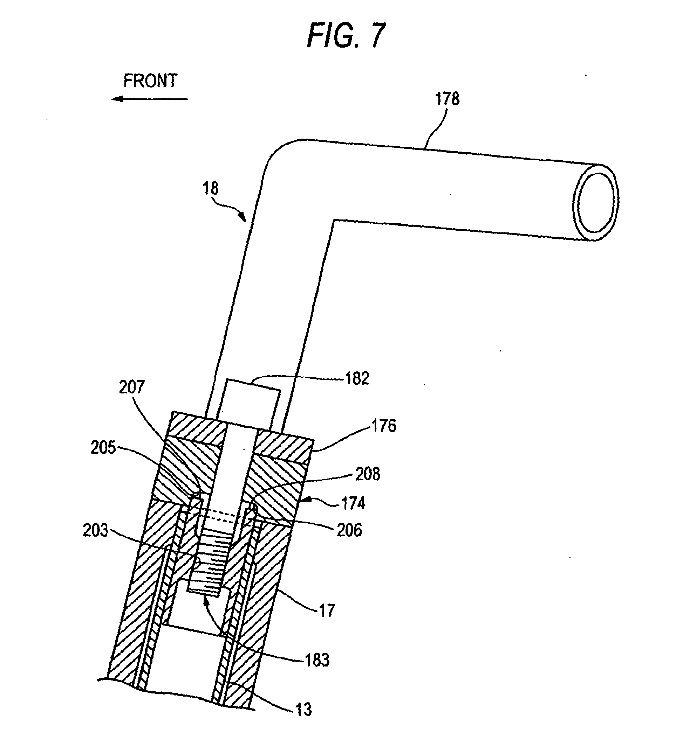

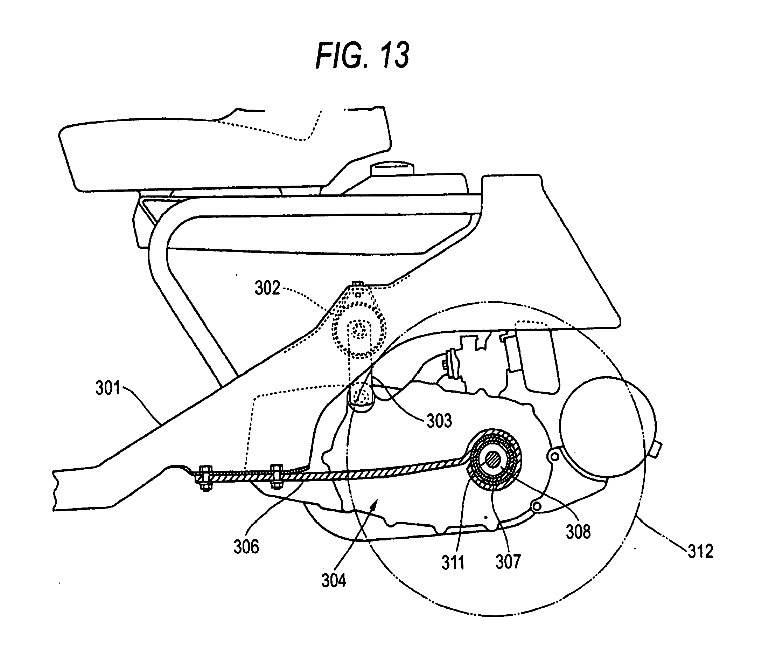

FIG. 7 in US Patent No. 4,405,027 will be described in reference to Fig. 13 as follows. Reference numerals used in Fig. 13 are replaced with other reference numerals.

Fig. 13 is a side elevational view of a vehicle to indicate the prior art swing arm and this side elevational view shows an arrangement that a power unit 304 is hang down at the rear and upper part of a frame 301 through a bracket 302, suspension plates 303, 303 (only reference numeral 303 at the figure looking person is indicated); leaf springs 306, 306 (only reference numeral 306 at the figure looking person is indicated) are extended from the rear and lower part of the frame 301; rear axles 311, 311 (only reference numeral 311 at the figure looking person is indicated) extending from the power unit 304 in a lateral direction through each of a rubber mount 307 and a ball bearing 308 are rotatably supported at the rear ends of these leaf springs 306, 306; and each of the rear wheels 312 is fixed to these rear axles 311, 311.

The aforesaid prior art discloses a structure in which the power unit 304 is hung at the frame 301, so that it is necessary that a frame side fixing part for fixing the bracket 302 is arranged at the frame 301, and the power unit 304 moved up and down together with the leaf spring 306 is provided with the power unit side fixing part for fixing the suspension plates 303, 303. If this structure does not hung the power unit at the frame 301, it is possible to eliminate any arrangement of the aforesaid side fixing part or the power unit side fixing part and thus it is also possible to increase a degree of freedom in shape, i.e. a degree of freedom in design of the frame 301 and the power unit 304.

In addition, although the leaf spring 306 is a member that can be easily flexed in an upward or downward direction, the frame 301 and the power unit 304 are connected by the bracket 302, suspension plates 303, 303, so that the upward or downward swinging motion of the leaf spring 306 is restricted, an amount of upward or downward stroke of the rear wheels 312 is reduced to cause a riding comfortable feeling at the vehicle to be deteriorated.

Further, it is also desired to reduce a cost and weight of a suspension for the aforesaid rear wheels 312.

### (Vehicle Handlebar Fixing Structure)

There have been well known in the art to cause a handlebar to be fixed to the upper end of a stem pipe with a nut (Refer to Japanese Utility Model Publication JP-A-UM-59-33740, for example) and to cause a handlebar to be fixed to the upper end of a steering shaft with a bolt (Refer to Japanese Patent Laid-Open JP-A-62-205888, for example).

Fig. 3 in JP-A-UM-59-33740 will be described in reference to Fig. 14. Reference numerals used in Fig. 14 are replaced with other reference numerals.

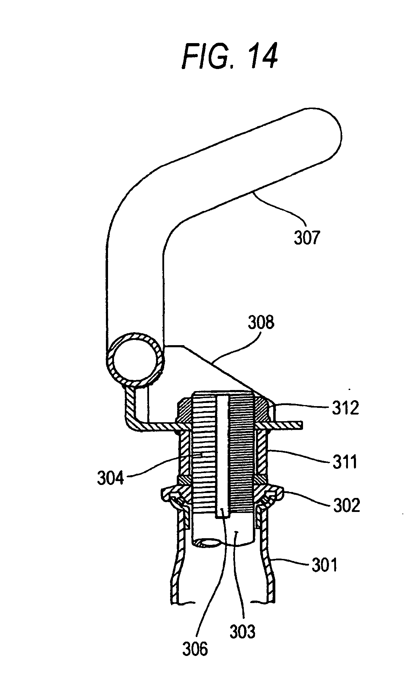

Fig. 14 is a sectional view for showing the prior art vehicle handlebar fixing structure and this sectional shows a structure that a stem pipe 303 is supported at the upper part of a head pipe 301 through a bearing 302, the upper end of the stem pipe 303 is formed with a male thread 304 and an axial extending concave groove 306, a collar 311 is fixed to a handlebar pipe 307 through a bracket 308, the collar 311 is fitted to the upper end of the stem pipe 303, a convex part (not shown) arranged at the inner circumferential surface of the collar 311 is inserted into the concave groove 306 of the stem pipe 303 to set position of the collar 311 in respect to the stem pipe 303, a nut 312 is screwed onto a male thread 304 of the stem pipe 303 to fasten the collar 311 and the bracket 308, thereby a handlebar pipe 307 is fixed to the stem pipe 303.

Fig. 3 in JP-A-62-205888 will be described in reference to Fig. 15. Reference numerals used in Fig. 15 are replaced with other reference numerals.

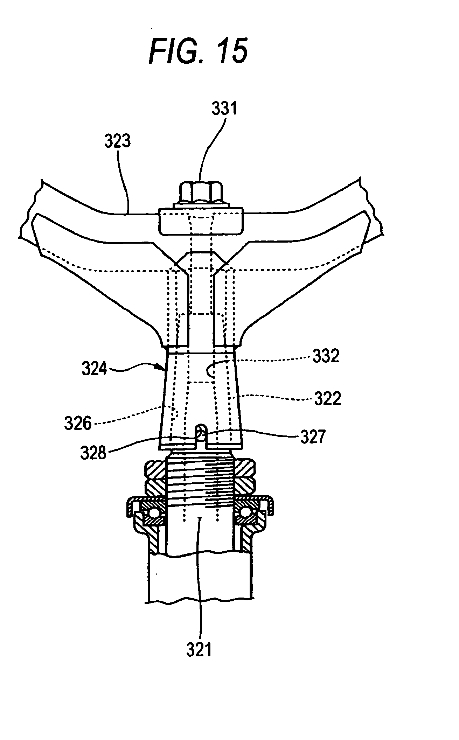

Fig. 15 is a front elevational view (a sectional view in part) for showing the prior art vehicle handlebar fixing structure, an outer circumference of the upper end of a steering shaft 321 is formed with a tapered surface 322, an inner circumference of the lower part of a handlebar stem 324 having the handlebar 323 fixed at the upper part is formed with an inner tapered surface 326, an inner tapered surface 326 is fitted to the aforesaid tapered surface 322 and at the same time a groove 328 formed at the lower end of the handlebar stem 324 is engaged with a pin 327 protruded from the steering shaft 321 so as to set position of the handlebar stem 324 in regard to the steering shaft 321, a bolt 331 is passed into the handlebar 323 and the handlebar stem 324, the bolt 331 is screwed into a threaded hole 332 arranged at the handlebar stem 324 and the handlebar bar 323 is fixed to the steering shaft 321.

In Fig. 14, although the nut 312 and the upper end of the stem pipe 303 are hardly exposed because they are covered by a bracket 308 at their front side, right and left sides, if it becomes possible not to use the bracket 308, for example, but to cover the nut 312 and the upper end of the stem pipe 303 only with the handlebar pipe 307, a simple structure can be attained while its outer appearance is being improved.

In addition, since a concave groove 306 for use in position setting the handlebar pipe 307 can be seen from above the stem pipe 303, its outer appearance characteristic is deteriorated.

In Fig. 15, since the head part of the bolt 331 is exposed above the handlebar bar 323 and an engagement part between the pin 327 and the groove 328 is also exposed at a front part and a rear part of the steering shaft 321, there remains a problem in view of its outer appearance.

### (Output Shaft Supporting Structure for Vehicle)

There has been well known in the art to cause an output shaft of a transmission to be protruded out of a side surface of the transmission and the output shaft to be cantilevered (Refer to Japanese Patent Publication JP-B-1-47356, for example.).

Fig. 1 in JP-B-1-47356 will be described in reference to Fig. 18. Reference numerals used in Fig. 18 are replaced with other reference numerals.

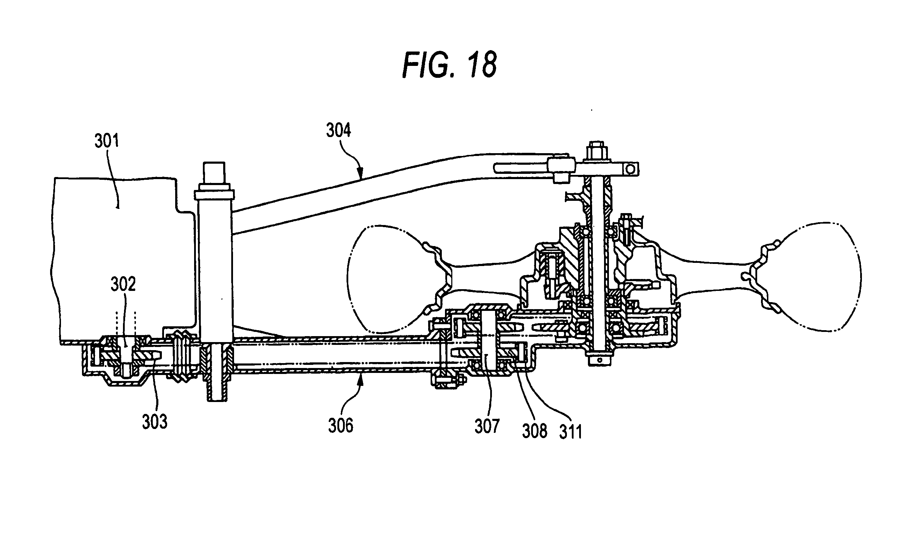

Fig. 18 is a sectional view for showing the prior art output shaft supporting structure for a vehicle and this sectional shows that an output shaft 302 is rotatably attached to a transmission 301 through a bearing (not shown), this output shaft 302 is protruded toward a side direction, a sprocket 302 is fixed to the protruded portion, a shaft 307 is rotatably arranged at a chain case 306 constituting a swing arm 304, a sprocket 308 is attached to this shaft 307 and a chain 311 is applied between these sprockets 303, 308.

The aforesaid output shaft 302 is arranged in a canti-lever form and if its output is increased, it becomes easily a flexed state, so that it is necessary to increase an outer diameter of the output shaft 307. If its outer diameter is increased, a size of the transmission 301 is increased and at the same time its weight is also increased.

### Summary of the Invention

### (Main Object)

One of objects of the present invention is to simplify a bending shape of a vehicle frame, increase its strength and rigidity, and improve an outer appearance of the vehicle.

Aspect 1A of the invention relates to a vehicle in which a front fork is attached to a head pipe in such a way that it enables to be steered, a front wheel is attached to a lower end of the front fork, and one vehicle body frame is extended from the head pipe in a rearward direction, wherein the vehicle body frame has a shape as seen from a side elevational view with an S-shape being laid in a forward or rearward direction of the vehicle, both a foot-straddling part and a foot-mounting part are arranged at a front arcuate part downward-protruded and installed at a front half part of the S-shape of the vehicle body frame, and an engine is arranged in a space below a rear arcuate part upward-protruded and installed at a rear half part of the S-shape of the vehicle body frame.

Making the vehicle body frame into one S-shaped frame enables the vehicle body frame to be smoothly bent in an arcuate form and the number of bent portions to be reduced

In addition, either an entire or a part of one S-shaped frame is exposed outside to enable a slim and stream-like outer appearance to be attained.

In aspect 2A of the invention, the engine is fixed to the swing arm extending substantially from an intermediate part of the S-shaped part of the vehicle body frame in a rearward direction.

Since the engine is positioned at the rear side of the S-shaped frame, it becomes possible to assure an engine arrangement space and an upward or downward motion space for the engine when the swing arm is swung at the space below the rear arcuate part.

In aspect 3A of the invention, the front arcuate part and the rear arcuate part have the same radius of curvature.

Setting a radius of curvature of the front arcuate part and a radius of curvature of the rear arcuate part to the same value to each other enables the front arcuate part and the rear arcuate part to be formed with a same machining tool and further enables machinability of the S-shaped frame to be improved more.

In aspect 4A of the invention, the vehicle body frame is configured from a rectangular pipe.

Since the vehicle body frame is configured from a rectangular pipe, the rectangular pipe having the same outer diameter and the same width and height of a sectional surface as those of the round pipe has a large section modulus as compared with those of the frame configured from a round pipe, for example, so that its strength and rigidity can be improved. In addition, it becomes easily possible to weld a bracket to the flat surface of the rectangular pipe or directly fix the bracket to it with small screws and the like.

In aspect 5A of the invention, a stopper against which the swing arm abuts is provided at a rear end of the S-shape of the vehicle body frame.

It becomes easy to arrange the stopper at the rear end of the S-shaped portion of the vehicle body frame, and it becomes possible to cause the stopper to be abutted against the rear portion of the swing arm.

In accordance with the aspect 1A, making the vehicle body frame with one S-shaped frame enables the frame to be smoothly flexed in an arcuate form and at the same time enables the number of flexed portions to be decreased and enables machinability of the frame to be improved. Accordingly, it is possible to reduce a cost of the vehicle body frame.

In addition, exposing either an entire one S-shaped frame or a part of it outside enables a slim stream-like outer appearance characteristic to be attained, the outer appearance characteristic to be improved and further enables a productivity characteristic to be increased.

The aspect 2A enables an engine arrangement space as well as an upward or downward motion space for the engine when the swing arm is swung to be assured at a space below the rear arcuate part. With such an arrangement as above, the vehicle space can be effectively utilized and a small-sized and compact vehicle can be attained.

The aspect 3A has the same radius of curvature at the front arcuate part and the rear arcuate part to each other enabling machinability of the S-shaped frame to be improved more and a productivity of the S-shaped frame to be increased. Accordingly, it is possible to reduce a cost of the frame.

The aspect 4A has a frame formed by a rectangular pipe, so that its strength and rigidity can be increased more as compared with those of the frame formed with the round pipe. In addition, making the frame with the rectangular pipe facilitates a welding of the bracket to the frame or direct fixing of the component parts to it with small screws and the like, enables a productivity of the vehicle to be increased and further a cost of the vehicle to be reduced.

The aspect 5A enables the stopper to be easily arranged at the rear end of the S-shaped portion of the frame and causes the stopper to be abutted against the rear portion of the swing arm, so that the present invention enables a swinging motion of the swing arm to be positively stopped as compared with a system in which the stopper abuts against the front part of the swing arm, for example.

### (Subsidiary Object 1)

One of the objects of the present invention is to increase a degree of freedom in design of a vehicle body frame and a swing arm of a vehicle, improve a riding comfortable feeling at the vehicle, and reduce a cost and weight of a suspension.

In aspect 1B of the invention, a swing arm is attached to a vehicle body frame in such a way that it enables to be swung in an upward or downward direction, a wheel shaft is attached to an end of the swing arm, and a wheel is attached to the wheel shaft. Further, the swing arm is of a leaf spring, a part near a fixing part thereof to the vehicle body frame is supported from above and below by a supporting member, and the swing arm has a function of a suspension spring.

As compared with an example of the prior art in which the fixing location for the swing arm side and the frame side is necessary when the supporting member and the suspension spring are applied over the swing arm side and the frame side, the present invention does not restrict a shape of the swing arm and the frame because there is not provided any member to be fixed at the end side of the swing arm and the frame side.

In addition, it becomes possible to increase an amount of swing of the swing arm by making the swing arm with the leaf spring, and also it becomes possible to cause the swing arm itself to act as the suspension spring.

In aspect 2B of the invention, the supporting member is a tubular bushing having the inner cylinder, an outer cylinder and a rubber provided between the inner cylinder and the outer cylinder.

A vibration energy transmitted to the vehicle body frame is absorbed with damping force of the rubber in the tubular bushing while a transmittance of shock or vibration from a road surface to the vehicle body frame is being dampened.

In aspect 3B of the invention, an engine driving the wheels is installed on the swing arm.

Fixing of the engine to the swing arm enables a vibration of engine to be dampened with the swing arm and further vibration transmitted to the vehicle body frame to be restricted.

In aspect 4B of the invention, a stopper for stopping an upward swing of the swing arm is provided at a rear end of the vehicle body frame.

Arranging of the stopper at the rear end of the vehicle body frame becomes easy and a simple configuration enables the upward swinging of the swing arm to be stopped.

In accordance with the aspect 1B, a shape of the swing arm and frame is not restricted because there is not provided any member to be fixed at the end side of the swing arm and the frame side. Therefore, a degree of freedom in design of the swing arm and the frame can be increased.

In addition, making the swing arm with a leaf spring enables an amount of swing of the swing arm to be increased, an upward or downward stroke of the wheels to be increased and a riding comfortable feeling to be improved.

Further, making the swing arm with a leaf spring enables the swing arm itself to act also as a suspension spring and any special suspension spring not to be arranged, so that a structure of the suspension for supporting the wheels can be simplified and a low cost and light weight of the vehicle can be attained.

The aspect 2B enables vibration energy transmitted to the vehicle body frame to be absorbed with a damping force of the rubber in the tubular bushing while transmittance of either shock or vibration from a road surface to the vehicle frame is being dampened with an elastic force of the leaf spring.

The aspect 3B enables a vibration of engine to be dampened by the swing arm and vibration transmitted to the vehicle body frame to be restricted because the engine is fixed to the swing arm.

The aspect 4B enables the stopper to be easily arranged at the vehicle body frame because the rear end of the vehicle body frame is provided with a stopper and at the same time enables an upward swinging of the swing arm to be stopped with a simple configuration and enables its cost to be restricted.

### (Subsidiary Objection 2)

One of the objects of the present invention is to improve an outer appearance of a handlebar fixing part and further make the handlebar fixing part a simple structure by setting the fastening members such as a bolt or a nut and the like for use in fixing the handlebar to the steering stem and making the position setting part for position setting the handlebar to the steering stem in a vehicle handlebar fixing structure hardly exposed to the external part.

In aspect 1C of the invention, a steering stem is rotatably attached to a head pipe, the front fork is attached to a lower end of the steering stem in such a way that it enables to be steered, the front wheel is attached to the lower end of the front fork, and a handle is fixed to an upper end of the steering stem. Further, a female thread and a position setting part are provided at the upper end of the steering stem, the handle includes a pair of right and left handlebars connected by a connector member, and the handle is fixed to the upper end of the steering stem by setting a position of the connector member at the position setting part and by screwing a piece of bolt, which passes through the connector member from between the right and left handlebars, into the female thread.

The handle includes a pair of right and left handlebars, and a piece of bolt passed from between the right and left handlebars and through the connector member is screwed into the female thread to cover the head part of the bolt with a pair of right and left handlebars and make them hardly seen and the handle fixing part has a simple structure.

In addition, when the position of the connector member is set by the position setting part at the upper end of the steering stem, it becomes possible to prevent the position setting part from being exposed to the external part.

In aspect 2C of the invention, the position setting part is either a concave part or a convex part which fits to the connector member.

Even if the handlebar fixing structure is simple, the steering stem and the connector member are fitted to each other through the concave part and the convex part to improve a connecting strength.

In accordance with the aspect 1C, the handle is constituted by a pair of right and left handlebars and a piece of bolt passed from between the right and left handlebars and through the connector member is screwed into the female thread, so that the head part of the bolt is covered by a pair of right and left handlebars and hardly seen and even if there is not provided any cover covering the head part of the bolt in particular, its outer appearance characteristic can be improved more, a simple structure of the handlebar fixing part can be attained and its cost can be restricted.

Further, when the connector member is set in its position by the position setting part at the upper end of the steering stem, it is possible to prevent the position setting part from being exposed out of the vehicle and to improve more the outer appearance characteristic.

In accordance with the aspect 2C, the position setting part is either the concave part or the convex part fitted to the connector member, so that even if the handlebar fixing structure is simple, its connecting strength can be improved by fitting the steering stem to the connector member through the concave part and the convex part.

### (Subsidiary Objection 3)

One of the objects of the present invention is to enable the output shaft supporting structure for a vehicle to be adapted for a large output and further to make a small-sized and light weight driving source by reducing an outer diameter of the output shaft.

In Aspect 1D of the invention, an output shaft is arranged at one end of a crank shaft of the engine through a clutch, and a chain is applied between a drive sprocket arranged at the output shaft and a driven sprocket arranged at the wheel shaft of the wheels to drive the wheels. Further, the output shaft is supported at both sides of the drive sprocket through bearings.

Even if the output shaft is short in its length, the output shaft is supported at both sides of the drive sprocket, so that it becomes possible to rigidly support the output shaft.

In aspect 2D of the invention, an intermediate shaft is arranged below the output shaft, a first central sprocket and a second central sprocket are attached to the intermediate shaft, the chain includes a first chain and a second chain separate from the first chain, the first chain is applied over the drive sprocket and the first central sprocket, and a second chain is applied over the second central sprocket and the driven sprocket.

Arrangement of the intermediate shaft below the output shaft enables either the position of the intermediate shaft or the number of teeth of the first central sprocket and the second central sprocket attached to the intermediate shaft.

In aspect 3D of the invention, the crank shaft and the output shaft are arranged on the same axis.

Arrangement of the crank shaft and the output shaft on the same axis enables the clutch to be easily installed between these members.

In aspect 4D of the invention, the engine is installed on a swing arm supporting the wheel shaft at one end, and the intermediate shaft is arranged near the swing arm.

Arrangement of the intermediate shaft at the swing arm nearer than the output shaft enables a relative inclination between the second central sprocket at the intermediate shaft and the driven sprocket at the wheel shaft to be reduced even if the swing arm is twisted during a running of the vehicle, for example.

In accordance with the aspect 1D, the output shaft can be rigidly supported because the output shaft is supported at both sides of the drive sprocket. Accordingly, it can accommodate for a large output by this output shaft supporting structure and in addition, when the outputs are the same to each other, the present invention enables an outer diameter of the output shaft to be made lower as compared with that of the canti-levered output shaft and also the present invention enables a small-sized and light weight engine acting as a driving source to be attained.

In accordance with the aspect 2D, it is possible to increase a degree of freedom of a power transmittance path ranging from the output shaft to the wheel shaft by changing a position of the intermediate shaft because the intermediate shaft is arranged below the output shaft. In addition, it is also possible to increase a degree of freedom of transmission ratio between the output shaft and the wheel shaft by changing the number of teeth of the first central sprocket and the second central sprocket.

In accordance with the aspect 3D, it is possible to make an easy placement of a clutch between the crank shaft and the output shaft because these shafts are arranged on the same axis and the present invention does not need any plurality of gears or sprockets for use in connecting between the crank shaft and the output shaft as found in a state in which the crank shaft and the output shaft are not arranged on the same axis, for example, so that a cost for these members can be restricted.

In accordance with the aspect 4D, it is possible to reduce a relative inclination between the second central sprocket at the intermediate shaft and the driven sprocket at the wheel shaft and to perform an efficient power transmission even if the swing arm is twisted during running of the vehicle, for example, because the intermediate shaft is arranged nearer at the swing arm than the output shaft.

### Brief Description of the Drawings

Fig. 1 is a side elevational view for showing a vehicle in accordance with the present invention;
Fig. 2 is a rear side elevational view for showing a vehicle in accordance with the present invention;
Figs. 3A and 3B are sectional views for showing a swing arm fixing part of a vehicle in accordance with the present invention;
Fig. 4 is a sectional view taken along line 4-4 of Fig. 1;
Fig. 5 is a sectional view taken along line 5-5 of Fig. 1;
Fig. 6 is a sectional view taken along line 6-6 of Fig. 1;
Fig. 7 is a sectional view taken along line 7-7 of Fig. 6;
Figs. 8A and 8B are perspective views for showing a vehicle handlebar fixing structure in accordance with the present invention;
Fig. 9 is a sectional view for showing a vehicle engine in accordance with the present invention;
Fig. 10 is a first action view for showing an action when the vehicle swing arm in accordance with the present invention is swung;
Fig. 11 is a second action view for showing an action when the vehicle swing arm in accordance with the present invention is swung;
Fig. 12 is a side elevational view of a vehicle for showing the prior art swing arm;
Fig. 13 is a side elevational view of a vehicle for showing the prior art swing arm;
Fig. 14 is a sectional view for showing the prior art vehicle handlebar fixing structure;
Fig. 15 is a front elevational view for showing the prior art vehicle handlebar fixing structure;
Fig. 16 is a side elevational view for showing another preferred embodiment of the vehicle power transmission mechanism in accordance with the present invention;
Fig. 17 is a sectional view taken along line 13-13 of Fig. 16; and
Fig. 18 is a sectional view for showing the prior art vehicle output shaft supporting structure.

### Detailed Description of the Preferred Embodiments

Referring now to the accompanying drawings, an embodiment of the present invention will be described as follows. The drawings shall be seen in an orientation of each of the reference numerals.

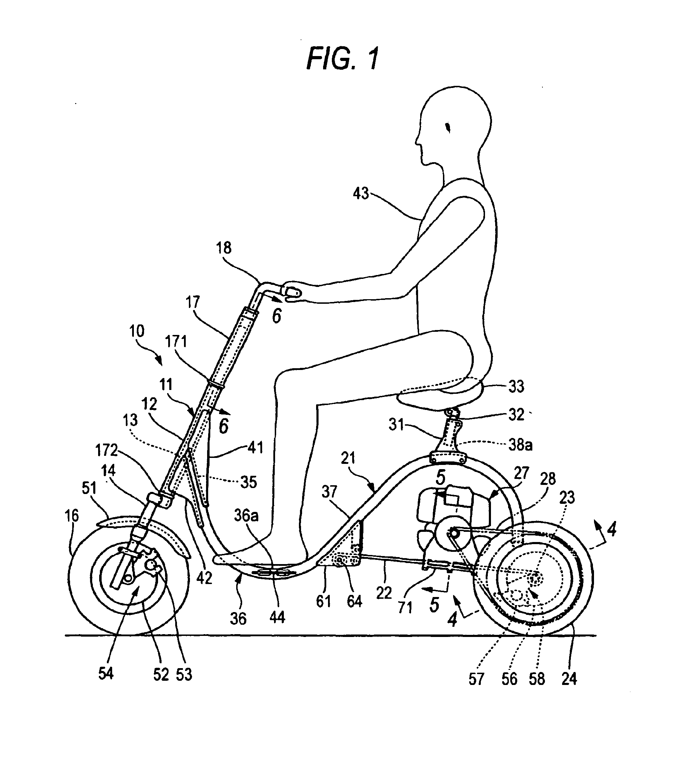

Fig. 1 is a side elevational view for showing a vehicle of the embodiment, wherein a vehicle 10 is a three-wheeled vehicle in which a steering stem 13 is rotatably attached to a head pipe 12 constituting the front end of a vehicle body frame 11; a front fork 14 is fixed to the lower part of the steering stem 13; a front wheel 16 is fixed to the lower part of the front fork 14; a handle post 17 is fixed to the upper end of the steering stem 13; a handle 18 is fixed to the handle post 17; a main frame 21 constituting the vehicle body frame 11 is extended from the head pipe 12 in an S-shape in a rearward direction; a swing arm 22 composed of a leaf spring is extended from the central part of the main frame 21 in a rearward direction; a wheel shaft 23 is rotatably attached to the rear end of the swing arm 22; rear wheels 24, 26 (only a reference numeral 24 at the figure looking person is indicated) are fixed to each of the ends of the wheel shaft 23; an engine 27 is fixed to the intermediate part of the swing arm 22 and an output of this engine 27 is transmitted to the rear wheels 24, 26 by a chain 28; a main post 31 is fixed to the rear part of the main frame 21; a seat post 32 is slidably attached to the main post 31; and a saddle 33 is attached to the seat post 32.

The main frame 21 comprises a front linear part 35 composed of rectangular pipe and extending from the head pipe 12 in a substantial downward linear form; a front arcuate part 36 extending from the lower end of the front linear part 35 in a downward direction in such a shape as one drawing a protruded arcuate shape; a central linear part 37 extending from the rear end of the front arcuate part 36 in a rearward slant upward direction; and a rear arcuate part 38 extending from the rear end of the central linear part 37 in an upward direction in such a shape as one to draw a protruded arcuate shape.

The front linear part 35 has its extremity end fixed to the head pipe 12 and its fixed part is reinforced with reinforcing members 41, 42.

The front arcuate part 36 is a segment to which floor supporting portions 44, 45 (only the reference numeral 44 at the drawing looking person is shown) supporting a step floor (not shown) on which a rider 43 puts the feet on a bottom part 36a, and the lowest portion of the front arcuate part 36, i.e. the bottom part 36a is a foot straddling part where the rider straddles.

The front arcuate part 36 and the central linear part 37 are portions to support the swing arm 22. A rear arcuate part 38 is a part where the main post 31 is fixed to a top part 38a.

The aforesaid front arcuate part 36 and the rear arcuate part 38 are portions where radii of their arcs are the same to each other in order to facilitate manufacturing of the main frame 21.

In this case, reference numeral 51 denotes a front fender covering above the front wheel 16; reference numerals 52, 53 denote a brake disk and a brake caliper constituting a front disk brake 54; and reference numerals 56, 57 denote a brake disk and a brake caliper constituting a rear disk brake 58.

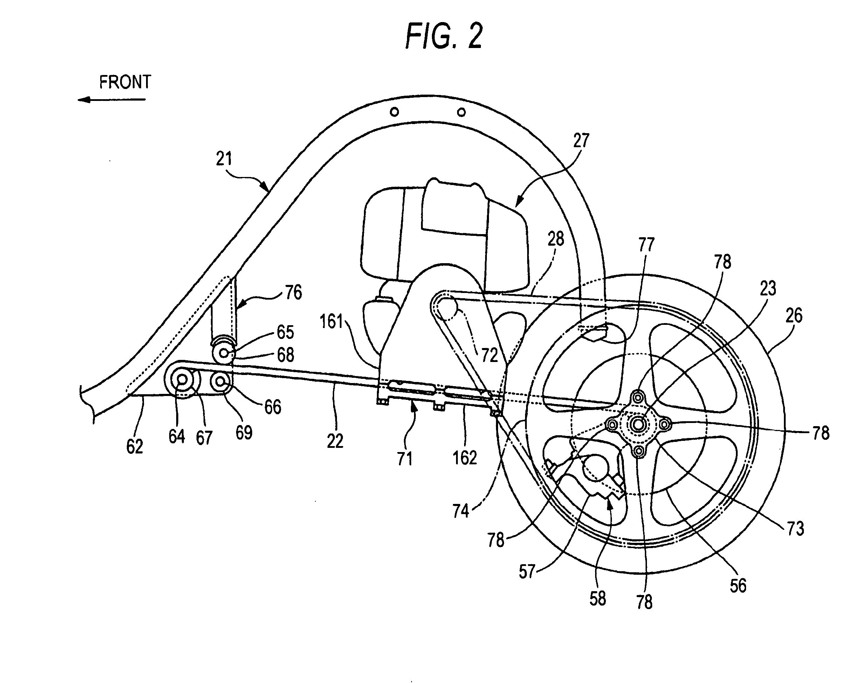

Fig. 2 is a side elevational view for showing the rear part of the vehicle in regard to the present invention (the rear wheel 24 at the figure looking person (refer to Fig. 1) is eliminated), wherein this figure indicates that pivot plates 61, 62 (the pivot plate 61 at the figure looking person is not shown) are fixed to the main frame 21; a pivot shaft 64 and supporting shafts 65, 66 are applied over these pivot plates 61, 62; one end of the swing arm 22 is wound around the pivot shaft 64 through a first bushing 67 and at the same time a swing arm 22 is held above and below near the pivot shaft 64 by a second bushing 68 and a third bushing 69 fixed to the supporting shafts 65, 66; the other end of the swing arm 22 is wound around a bearing (not shown); an engine supporting member 71 for supporting the engine 27 is fixed to the intermediate part of the swing arm 22; and a chain 28 is applied over a drive sprocket 72 fixed to an output shaft (not shown) of the engine 27 and a driven sprocket 74 fixed to the wheel shaft 23 through a sprocket supporting flange 73.

In this figure, reference numeral 76 denotes a first stopper fixed to the main frame 21 and the pivot plates 61, 62 so as to restrict an upward moving amount of the second bushing 68; reference numeral 77 denotes a second stopper arranged at the rear end of the main frame 21 so as to restrict an upward swinging amount of the swing arm 22; reference numerals 78...... (......denotes a plural number, similarly applied hereinafter) denote bolts for use in fixing the driven sprocket 74 to the sprocket supporting flange 73.

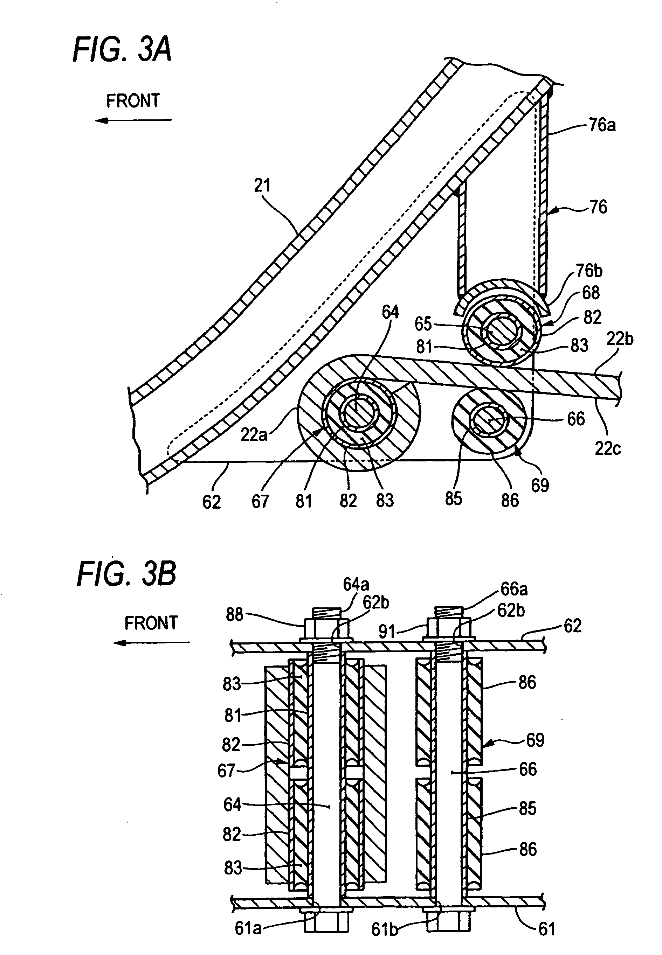

Figs. 3A and 3B are sectional views for showing a vehicle swing arm fixing part in regard to the present invention, wherein Fig. 3A is a section taken along a plane crossing at a right angle with the pivot shaft 64, and Fig. 3B is a section taken along a plane along the pivot shaft 64.

In Fig. 3A, the first bushing 67 comprises an inner cylinder 81 fitted to the pivot shaft 64, an outer cylinder 82 fitted to the inside part of a winding part 22a arranged at one end of the swing arm 22 and a rubber 83 vulcanized and adhered to these inner cylinder 81 and outer cylinder 82.

The second bushing 68 has the same structure as that of the first bushing 67 (for a sake of convenience, its reference numeral is different), wherein the outer cylinder 82 is abutted against the upper surface 22b of the swing arm 22.

The third bushing 69 comprises an inner cylinder 85 fitted to a supporting shaft 66, and a rubber 86 vulcanized and adhered around the inner cylinder 85, wherein the rubber 86 is abutted against the lower surface 22c of the swing arm 22.

The first stopper 76 comprises a stopper supporting member 76a extending downwardly from the main frame 21, and an arcuate stopper main body 76b fixed to the lower end of the stopper supporting member 76a.

As described above, a part of the swing arm 22 near the pivot shaft 64 is held above and below by the second bushing 68 and the third bushing 69 so as to restrict an upward or downward swing motion of the swing arm 22 and at the same time shock and vibration transmitted from the rear wheels 24, 26 (refer to Fig. 2 and the rear wheel 24 is not shown) to the main frame 21 are absorbed with an elastic force and damping force of the second bushing 68 and the third bushing 69 in addition to an elastic force of the swing arm 22 itself.

In Fig. 3B, the first bushing 67 has a rubber 83 vulcanized and adhered between the inner cylinder 81 and each of the two outer cylinders 82; the third bushing 69 has a rubber 86 vulcanized and adhered at the two locations of the inner cylinder 85; the first bushing 67 and the third bushing 69 are arranged between the two pivot plates 61, 62; shaft insertion holes 61a, 61b are opened at the pivot plate 61; shaft insertion holes 62a, 62b are opened at the pivot plate 62; the pivot shaft 64 of a bolt is passed through the shaft insertion hole 61a, inner cylinder 81 and shaft insertion hole 62a; a first nut 88 is screwed onto a male thread 64a arranged at the extremity end of the pivot shaft 64; a supporting shaft 66 of a bolt is passed through the shaft insertion hole 61b, inner cylinder 85 and shaft insertion hole 62b; and a second nut 91 is screwed onto a male thread 66a arranged at the extremity end of the supporting shaft 66 to fix the first bushing 67 and the third bushing 69 to the pivot plates 61, 62. Further, also as to the second bushing 68 (refer to Fig. 3A), this is fixed in the same manner as that for the first bushing 67 and the third bushing 69.

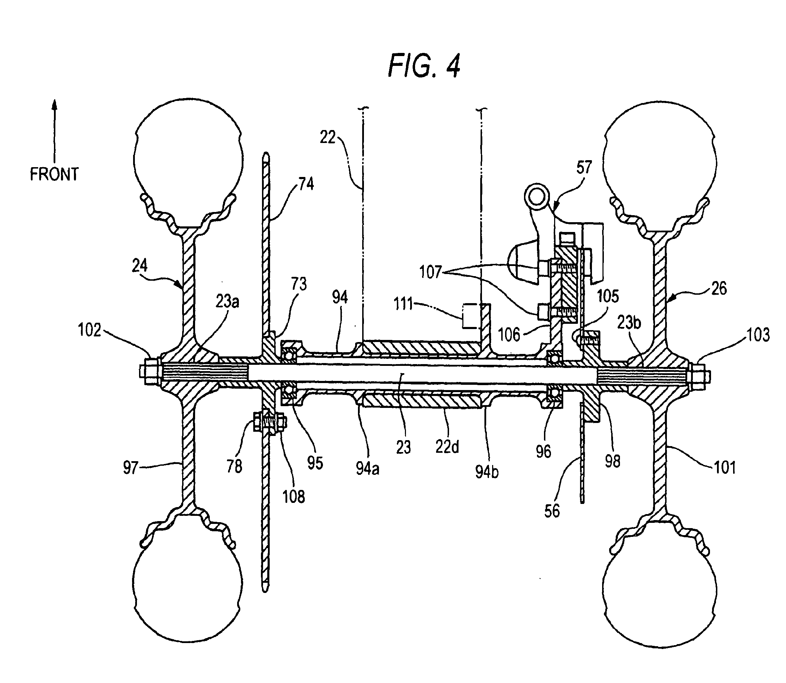

Fig. 4 is a sectional view taken along line 4-4 of Fig. 1, wherein a bearing member 94 is fixed to the rear end of the swing arm 22; the wheel shaft 23 is rotatably passed in the bearing member 94 through bearings 95, 96; a sprocket supporting flange 73 and a wheel 97 constituting the rear wheel 24 are connected through spline to a male spline 23a arranged at one end of the wheel shaft 23; a disk supporting flange 98 and a wheel 101 constituting the rear wheel 26 are connected through spline to a male spline 23b arranged at the other end of the wheel shaft 23; nuts 102, 103 are screwed onto both ends of the wheel shaft 23; a driven sprocket 74 is fixed to the sprocket supporting flange 73 and a brake disk 56 is fixed to the disk supporting flange 98 with small screws 105......; and the brake caliper 57 is fixed to a protruding part 106 arranged at one end of the bearing member 94 with bolts 107, 107. Further, reference numerals 108......denote nuts screwed onto the bolts 78......for fixing the driven sprocket 74.

The bearing member 94 is formed with annular convex parts 94a, 94b so as to wind the winding part 22d of the swing arm 22, and the swing arm 22 is arranged between these annular convex parts 94a, 94b to prevent an axial motion of the bearing member 94 in respect to the swing arm 22. Further, reference numeral 111 denotes a rotation stopper integrally formed at the bearing member 94 so as to prevent the bearing member 94 from being rotated against the swing arm 22.

As described above, the driven sprocket 74 is arranged near the inside part of the rear wheel 24, and a brake disk 56 and a brake caliper 57 are arranged near the inside part of the rear wheel 26 to cause these driven sprocket 74, brake disk 56 and brake caliper 57 to be hardly seen from the vehicle body side and then an outer appearance of the vehicle can be improved.

Fig. 5 is a sectional view taken along line 5-5 of Fig. 1 and this figure shows that a fan 122 is fixed with a nut 123 to one end of a crank shaft 121 rotatably attached in the engine 27; each of weights 124 is attached to each of the shafts 122a ......protruded integrally from the fun 122 toward a side part in such a way that it can be swung; these weights 124 ... are enclosed by a drum 126 to constitute a centrifugal clutch 127 by the shafts 122a ... , weights 124 ... and drum 126; a bearing 128 is arranged outside the crank case 27a of the engine 27; an output shaft 132 integrally formed with the drum 126 is rotatably attached to this bearing 128 through a bearing 131; a drive sprocket 72 is spline connected to a male spline 132a arranged at this output shaft 132; a shaft end receiving part 134 is arranged outside the bearing 128; the end of the output shaft 132 is rotatably supported through a bearing 135 at the shaft end receiving part 134; an engine supporting member 71 is arranged below the engine 27; a raising part 71a raised from the end part of this engine supporting member 71, the bearing part 128 and the shaft end receiving part 134 are fixed together to the crank case 27a with bolts 137 ... ; a side part supporting member 143 is fixed with bolts 144 ......through spacers 141, 141, 142, 142 to hub parts 27b, 27b arranged at the crank case 27a at the other end of the crank shaft 121; and the side part supporting member 143 is also fixed with bolts 146 ... to the end part of the side convex part 71b of the engine supporting member 71.

As described above, the output shaft 132 is a member supported at both ends with a bearing 131 arranged at the bearing part 128, and a bearing 135 arranged at the shaft end receiving part 134.

In this figure, reference numeral 151 denotes a bolt for preventing the weights 124 from being pulled out of the shaft 122a; reference numeral 152 denotes a shoe arranged at the end part of each of the weights 124 so as to be contacted with the inner circumferential surface of the drum 126; reference numerals 153, 154 denote a stopper ring for use in fixing the bearing 131; reference numerals 156, 157 denote a collar for use in position setting the drive sprocket 72 to the output shaft 132; reference numerals 161, 162 denote an upper part supporting member and a lower part supporting member constituting the engine supporting member 71 and holding the swing arm 22; and reference numerals 163......denote bolts for fastening the upper part supporting member 161 and the lower part supporting member 162 so as to hold the swing arm 22.

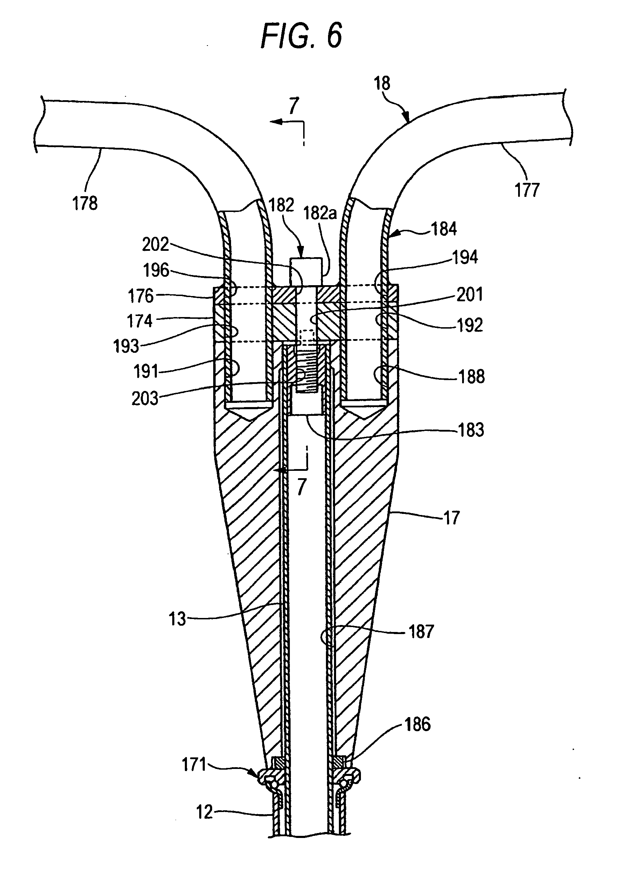

Fig. 6 is a sectional view taken along line 6-6 of Fig. 1 for showing a handlebar fixing structure of a vehicle 10 (refer to Fig. 1).

That is, this figure shows that a steering stem 13 is rotatably supported by an upper bearing 171 arranged at the upper end of the head pipe 12 and a lower bearing 172 arranged at the lower end of the head pipe 12 (refer to Fig. 1); the upper part of the steering stem 13 is enclosed by a handle post 17; a position of the spacer 174 is set at the upper part of this handle post 17; a handle supporting plate 176 is abutted against the upper part of this spacer 174 and each of a pair of handlebar bars 177, 178 passed through and fixed to the handle supporting plate 176 is passed through the spacer 174 and the handle post 17 in this order; one handle fixing bolt 182 is passed through the handle supporting plate 176 and the spacer 174 between the two handlebar bars 177, 178; and at the same time a handle fixing bolt 182 is screwed into the nut member 183 fixed in the upper end of the steering stem 13 and a handle 18 constituted by the handlebar bars 177, 178 is fixed to the steering stem 13.

The aforesaid handle supporting plate 176 and the handlebar bars 177, 178 are members constituting a handle assembly 184.

In this figure, reference numeral 182a denotes the head part of the handle fixing bolt 182; reference numeral 186 denotes a lock nut for setting the upper bearing 171 to the steering stem 13; reference numeral 187 denotes a hollow part arranged at the handle post 17 for inserting the steering stem 13; reference numerals 188, 191 denote handlebar insertion holes arranged at the handle post 17 for inserting the handlebars 177, 178; reference numerals 192, 193 denote handle passing holes opened at the spacer 174 for passing the handlebars 177, 178; reference numerals 194, 196 denote handle passing holes opened at the handle supporting plate 176 for passing the handlebars 177, 178; reference numeral 201 denotes a bolt passing hole opened at the spacer 174 for passing the handle fixing bolt 182; reference numeral 202 denotes a bolt insertion hole opened at the handle supporting plate 176 for passing the handle fixing bolt 182; and reference numeral 203 denotes a female thread formed at the nut member 183 for threadably connecting the handle fixing bolt 182.

Fig. 7 is a sectional view taken along line 7-7 of Fig. 6 and this figure shows that the lower surface of the spacer 174 is formed with concave parts 205, 206; convex parts 207, 208 are integrally formed with the upper end of a nut member 183; and the convex parts 207, 208 are fitted into the concave parts 205, 206 to cause the spacer 174 to be position set (preventing its rotation) in respect to the nut member 183, that is, the handle 18 is set in position in respect to the steering stem 13.

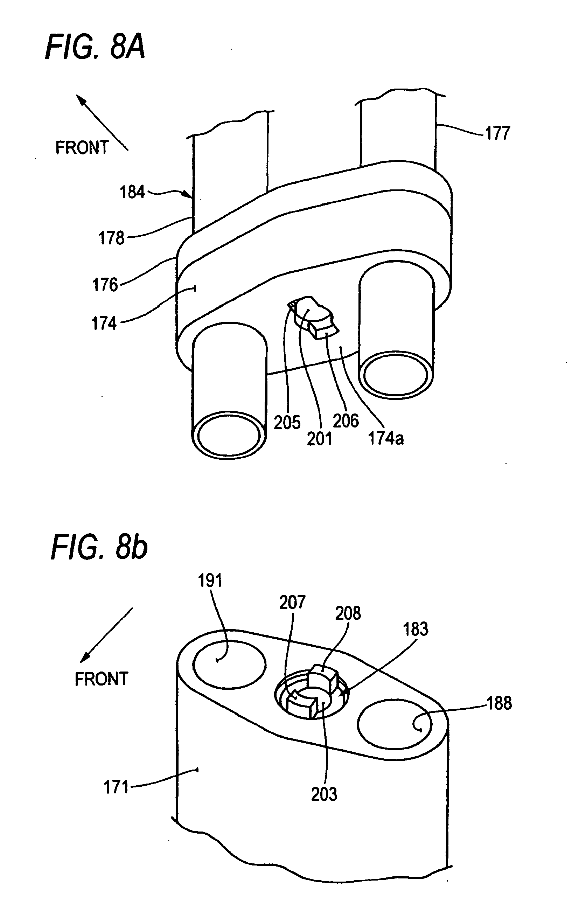

Figs. 8A and 8B are perspective views for showing a vehicle handlebar fixing structure in accordance with the present invention, wherein Fig. 8A is a perspective view for showing the spacer 174 and the handle assembly 184, and Fig. 8B is a perspective view for showing the handle post 17 and the nut member 183.

In Fig. 8A, the spacer 174 is a member in which its lower surface 174a is formed with concave parts 205, 206 at positions holding a bolt insertion hole 201 and at a front part and a rear part of the bolt insertion hole 201.

In Fig. 8B, this figure shows that the upper end of the nut member 183 is formed with opposing convex parts 207, 208 at its front side and rear side to hold the female thread 203.

As shown in the aforesaid Figs. 8A and 8B, the spacer 174 is formed with the concave parts 205, 206 and the nut member 183 is formed with the convex parts 207, 208 to enable the spacer 174 to be easily set in its position at the handle post 17 when the handle assembly 184 is assembled to the handle post 17 and further enables the handlebars 177, 178 of the handle assembly 184 to be easily passed through the handle passing holes 192, 193 (refer to Fig. 6) of the spacer 174 and the handlebar insertion holes 188, 191 under a state in which the spacer 174 is set in position to the handle post 17.

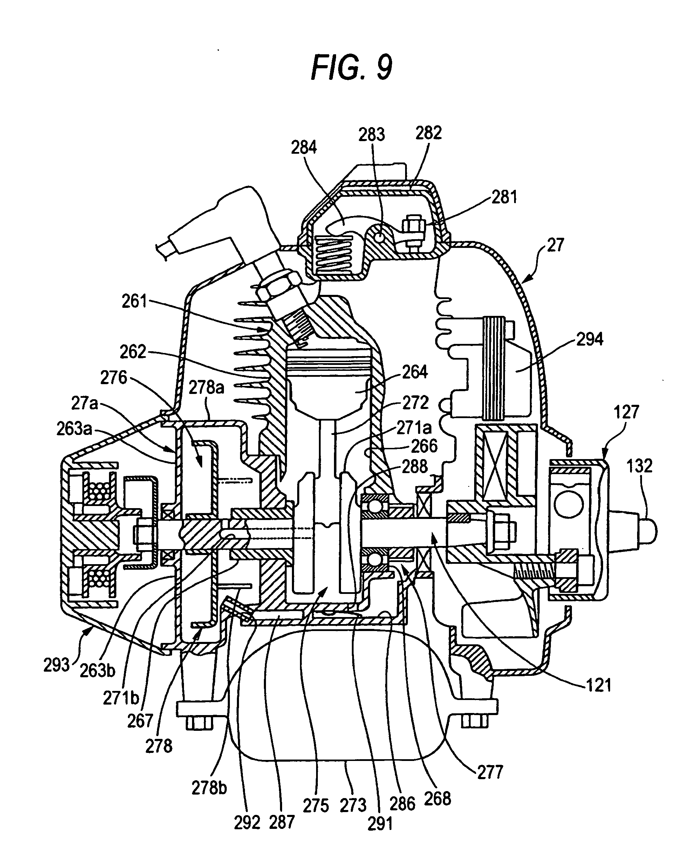

Fig. 9 is a sectional view for showing a vehicle engine in accordance with the present invention.

The engine 27 comprises an engine main body 261 and the engine main body 261 comprises a cylinder head integral type cylinder block 262 and a crank case 27a connected to the lower end surface of the cylinder block 262.

The cylinder block 262 is provided with, at its center part, a single cylinder 266 for storing a piston 264.

The crank case 27a is a member in which a pair of upper and lower case half bodies 263a, 263b is connected by plural bolts, and a crank shaft 121 is rotatably attached to a connected part between these case half bodies 263a, 263b through a plane bearing 267 and a ball bearing 268. Further, reference numeral 272 denotes a connecting rod for connecting a piston 264 to the crank shaft 121, and reference numeral 273 denotes a fuel tank fixed to the lower part of the crank case 27a.

In addition, the inside part of the crank case 27a is provided with a crank chamber 275 arranged at the central part of it, an oil reservoir chamber 276 and a valve chamber 277 arranged at the side part of the crank chamber 275, respectively.

The crank chamber 275 corresponds to a location where a crank part 271a of the crank shaft 121 is arranged.

The oil reservoir chamber 276 is a location where a specified amount of lubricant oil is stored and stores an oil slinger 278 fixed to the crank shaft. 121 so as to agitate the lubricant oil and disperse it (that is, so as to generate oil mist).

The oil slinger 278 comprises a plurality of long arm vanes 278a and a plurality of short arm vanes 278b, and these long arm vanes 278a and short arm vanes 278b are flexed to each other in a direction opposite to an axial direction of the crank shaft 121.

In this way, arrangement of the oil reservoir chamber 276 provided with the oil slinger 278 within the crank case 27a enables lubricant oil in the oil reservoir chamber 276 to be agitated in whatever operating attitude the engine 27 may take through rotation of the oil slinger 278 and then always enables oil mist to be generated.

A valve chamber 277 passes through one side of the cylinder block 262 and extends up to its head part and the upper part of the valve chamber 277 is provided with a valve device 281 opening or closing an intake valve and an exhaust valve. Further, reference numeral 282 denotes a head cover covering the upper part of the cylinder block 262; and reference numerals 283, 284 denote a rocker shaft and a rocker arm constituting the valve device 281.

The aforesaid crank chamber 275 and the oil reservoir chamber 276 are communicated with each other through a through-pass hole 271b opened at the crank shaft 121.

Since the through-pass hole 271b is made such that an opening to the oil reservoir chamber 276 is arranged at the central part of the oil reservoir chamber 276, a storage amount of lubricant oil in the oil reservoir chamber 276 is set in such a way that the aforesaid opening is not sunk in whatever inclination state or inverted state the engine 27 may take.

The crank case 27a comprises a valve chamber 286 communicated with the valve chamber 277 at its lower part, and an oil returning chamber 287 enclosing the valve chamber 286.

The valve chamber 286 corresponds to a location where it is communicated with the bottom part of the crank chamber 275 through a valve hole 288 and one-way valve 291 for opening or closing the valve hole 288.

The one-way valve 291 is a member for closing the valve hole 288 at the time of reducing pressure and opening the valve hole 288 at the time of increasing pressure in response to a pressure pulsation at the crank chamber 275.

The oil returning chamber 50 corresponds to a location where it is communicated with the oil reservoir chamber 276 through a through-pass hole 292 and in turn it is also communicated with the valve chamber 277 through an orifice not shown.

Reference numeral 293 in this figure denotes a recoil starter and reference numeral 294 denotes an ignition coil.

Action of the engine 27 described above will be explained as follows.

During operation of the engine 27, when the oil slinger 278 agitates lubricant oil to generate oil mist at the oil reservoir chamber 276 through rotation of the crank shaft 121, the oil mist is absorbed into the crank chamber 275 through the through-pass hole 271b when a pressure in the crank chamber 275 is reduced under an ascending motion of a piston 264 so as to lubricate around the crank part 271a and the piston 264.

In addition, when a pressure in the crank chamber 275 is increased due to a descending motion of the piston 264, the aforesaid oil mist is supplied from the valve hole 288 to the valve chamber 286 and the valve chamber 277 together with blow-by gas generated at the crank chamber 275 by opening the one-way valve 291, the oil mist and the blow-by gas are separated from each other at the valve chamber 277, the oil mist lubricates each of the members of the valve device 281 and the blow-by gas is discharged to an air cleaner.

Further, the oil mist sent to the valve chamber 277 returns back to the oil reservoir chamber 276, the lubricant oil liquefied at the valve chamber 277 returns back to the oil return chamber 287 through an orifice not shown. Then, returning of the oil mist and the liquefied lubricant oil in such a way as described above is carried out without any trouble in whatever inclination the engine 27 may take. In addition, even if the engine vibrates during running operation due to corrugations at a road, returning of the oil mist and the lubricant oil can be carried out without any trouble.

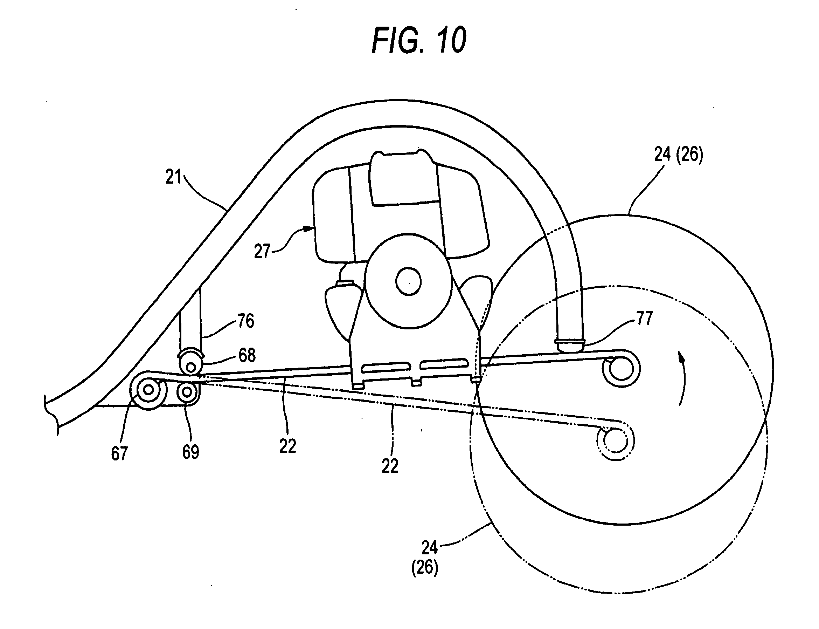

Action when the swing arm 22 described above is swung will be explained as follows. Fig. 10 is a first action figure indicating an action when a vehicle swing arm in accordance with the present invention is swung.

When the swing arm 22 is swung upwardly in respect to the main frame 21 to increase an amount of swing, an upward motion of the swing arm 22 is stopped with a second stopper 77 arranged at the rear end of the main frame 21 so as to prevent the swing arm 22 from being excessively swung.

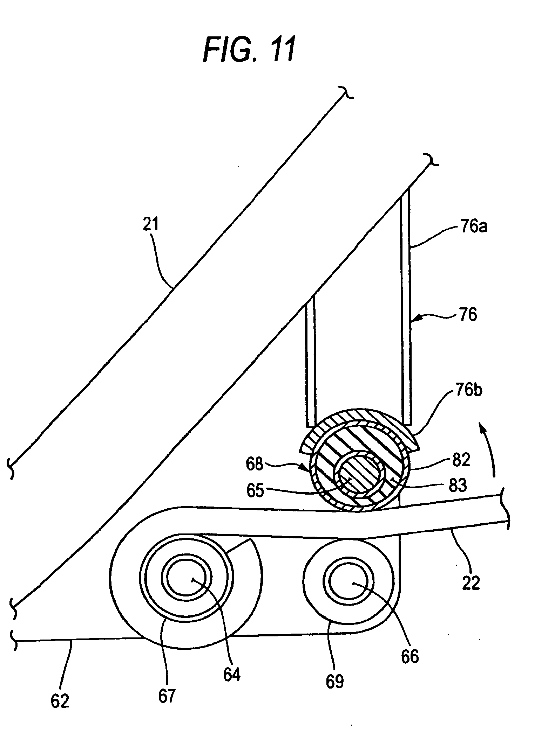

Fig. 11 is a second action figure indicating an action when the vehicle swing arm in accordance with the present invention is swung and an action of the bushing and stopper will be explained as follows.

When the swing arm 22 is swung upwardly, an outer cylinder 82 of the second bushing 68 is pushed up by the swing arm 22 and moves upwardly, so that the rubber 83 of the second bushing 68 is deformed to generate both an elastic force and a damping force. Then, when an upward swinging amount of the swing arm 22 is large, the outer cylinder 82 is moved substantially in an upward direction against the elastic force of the rubber 83, and the outer cylinder 82 abuts against a stopper main body 76b of the first stopper 76. Accordingly, it is possible to prevent an excessive deformation of the second bushing 68, more particularly the rubber 83 by the first stopper 76, so that the rubber 83 is hardly flexed and a life of the second bushing 68 can be extended.

### (Vehicle Frame)

As already been described in reference to Figs. 1 and 2, at first, the present invention relates to the vehicle 10 in which the front fork 14 is attached to the head pipe 12 in such a way that it can be steered, the front wheel 16 is attached to the lower end of the front fork 14, and the main frame 21 acting as one frame is extended from the head pipe 12 in a rearward direction characterized in that the main frame 21 is formed into a shape in which the S-shape is laid in a forward or rearward direction of the vehicle as seen from its side elevational view, the downward protruded front arcuate part 36 arranged at the front half part of the S-shape is provided with a bottom part 36a acting as a foot-straddling part and with floor supporting portions 44, 45 acting as feet-mounting portions, and then the engine 27 is arranged in a space below the upward protruded rear arcuate part 38 set at the S-shaped rear half part.

Making the main frame 21 with one S-shaped frame causes the main frame 21 to be smoothly flexed into an arcuate shoe and at the same time enables its bending location to be reduced and further machinability of the main frame 21 to be improved. Accordingly, a cost of the main frame 21 can be reduced.

In addition, exposing either an entire or a part of one S-shaped frame outside enables a slim and stream-line type outer appearance to be attained, a preferable impression to be given to a viewer and its outer appearance to be improved. Accordingly, it is possible to increase a product characteristic of the vehicle 10.

Further, the S-shaped front arcuate part 36 is utilized to form the bottom part 36a acting as a foot straddling part and floor supporting parts acting as feet-mounting parts and to form an engine installing space through utilization of space below the S-shaped rear arcuate part 38, so that it is possible to attain the simple vehicle 10 capable of utilizing effectively the lower space.

Secondly, the present invention is characterized in that the engine 27 is attached to the swing arm 22 extending from the substantial intermediate part of the S-shape part of the main frame 21 in a rearward direction.

It is possible to assure the engine installing space as well as the upward or downward motion space for the engine 27 when the swing arm 22 is swung at a space below the rear arcuate part 38. With such an arrangement as above, it is possible to effectively utilize a space of the vehicle 10 and make the vehicle 10 small-sized and compact.

Thirdly, the present invention is characterized in that the front arcuate part 36 and the rear arcuate part 38 have the same radius of curvature.

Setting the same radius of curvature of the front arcuate part 36 and the rear arcuate part 38 enables machinability of the S-shaped main frame 21 to be improved more and a productivity of the S-shaped main frame 21 to be increased. Accordingly, it is possible to reduce a cost of the main frame 21.

Fourthly, the present invention is characterized in that the main frame 21 is composed of a rectangular pipe.

Since the main frame 21 is composed of the rectangular pipe, its strength and rigidity can be improved more as compared with those of the frame composed of a round pipe, for example. In addition, making the main frame 21 with the rectangular pipe facilitates welding of a bracket to the main frame 21 or fixing some parts directly to the main frame with small screws and the like, enables productivity of the vehicle 10 to be increased and further enables a cost of the vehicle 10 to be reduced.

Fifthly, the present invention is characterized in that the rear end of the S-shaped portion of the main frame 21 is provided with the second stopper 77 to which the swing arm 22 abuts.

Since the rear end of the S-shaped part of the main frame 21 is applied, the second stopper 77 can be easily arranged and at the same time the second stopper 77 is abutted against the rear portion of the swing arm 22, so that the present invention enables a swinging action of the swing arm 22 to be positively stopped as compared with that of abutment of the stopper against the front part of the swing arm, for example.

In the above embodiment, although the main frame 21 is constituted by the front linear part 35, front arcuate part 36, central linear part 37 and rear arcuate part 38 as shown in Fig. 1, the present invention is not limited to this constitution, but it may be constituted only by the front linear part 35 and the rear arcuate part 38

The vehicle frame of the embodiment is preferable for a motorcycle.

### (Vehicle Swing Arm)

As already been described in reference to Figs. 2 and 3, at first, the present invention relates to the vehicle 10 (refer to Fig. 1) in which the swing arm 22 is attached to the vehicle body frame 11 (refer to Fig. 1), more particularly the main frame 21 in such a way that it may be swung in an upward or downward direction, the wheel shaft 23 is rotatably attached to the end of the swing arm 22 and the rear wheels 24, 26 (as to the rear wheel 24, refer to Fig. 4) acting as the wheels are attached to the wheel shaft 23 characterized in that the swing arm 22 is of a leaf spring, its location near the fixing part to the vehicle body frame 11 is supported from above and below with the second bushing 68 and the third bushing 69 acting as supporting members and at the same time the swing arm 22 has a function of the suspension spring.

As compared with the case in which when the supporting member and the suspension spring are applied over the swing arm side and the frame side as found in the prior art, for example, their fixing locations are required for the swing arm and the frame, the present invention shows that a shape of the swing arm 22 and a shape of the vehicle body frame 11 are not restricted because no members to be attached are present at the end of the swing arm 22 and the vehicle body frame 11, so that a degree of freedom in design for the swing arm 22 and the vehicle body frame 11 can be increased.

In addition, the swing arm 22 is of a leaf spring to enable a swinging amount of the swing arm 22 to be increased, an upward or downward stroke of the rear wheels 24, 26 to be increased and further a riding comfortable feeling at the vehicle 10 to be improved.

Further, making the swing arm 22 with a leaf spring enables the swing arm 22 itself to act as a suspension spring and no special suspension spring is required, so that it is possible to make a simple suspension for supporting the rear wheels 24, 26 as well as to attain both a low cost and a light weight of the vehicle 10.

Secondly, the present invention is characterized in that the supporting member is comprised of the second bushing 68 acting as a tubular bushing composed of the inner cylinder 81, outer cylinder 82 and rubber 83 present between these inner cylinder 81 and outer cylinder 82, the inner cylinder 85 and the third bushing 69 acting as a tubular bushing composed of rubber 86 vulcanized and adhered to the inner cylinder 85.

It is possible to absorb vibration energy transmitted to the vehicle body frame 11 with damping force of the rubbers 83, 86 of the second bushing 68 and the third bushing 69 while a transmission of either a shock or a vibration from a road surface to the vehicle body frame 11 is being loosened.

Thirdly, the present invention is characterized in that the engine 27 for use in driving the rear wheels 24, 26 is fixed to the swing arm 22.

It is possible to dampen a vibration of the engine with the swing arm 22 because the engine 27 is fixed to the swing arm 22 and further it is possible to restrict the vibration transmitted to the vehicle body frame 11.

Fourthly, the present invention is characterized in that the rear end of the vehicle body frame 11 is provided with the second stopper 77 acting as a stopper for stopping an upward swinging motion of the swing arm 22.

Arrangement of the second stopper 77 at the rear end of the vehicle body frame 11 enables the second stopper 77 to be easily installed at the vehicle body frame 11, the upward swinging of the swing arm 22 to be terminated by a single configuration and a cost of the second stopper 77 to be restricted.

Further, it is preferable that the swing arm composed of a leaf spring in accordance with the present invention is made of spring steel, resin and FRP (Fiber Reinforced Plastic) and the like.

The vehicle swing arm of the embodiment is preferable for a three-wheeled vehicle and a four-wheeled vehicle.

### (Vehicle Handlebar Fixing Structure)

As already been described in reference to Figs. 6 and 8, at first, the present invention relates to the vehicle 10 (refer to Fig. 1) in which the steering stem 13 is rotatably attached to the head pipe 12, the front fork 14 (refer to Fig. 1) is attached to the lower end of the steering stem 13 in such a way that it can be steered, the front wheel 16 (refer to Fig. 1) is attached to the lower end of this front fork 14 and the handle 18 is fixed to the upper end of the steering stem 13 characterized in that the upper end of the steering stem 13 is formed with the female thread 203 and at the same time provided with convex parts 207, 208 acting as position setting parts, the handle 18 is constituted by a pair of right and left handlebars 177, 178 and at the same time these handlebars 177, 178 are connected by the handle supporting plate 176 acting as a connector member, the handle fixing bolt 182 acting as a piece of bolt passed from between the right and left handlebars 177, 178 through the handle supporting plate 176 is screwed into the female thread 203 while the spacer 174 being set in its position by the convex parts 207, 208, thereby the handle 18 is fixed to the upper end of the steering stem 13.

The handle 18 is constituted by a pair of right and left handlebars 177, 178 and at the same time a piece of handle fixing bolt 182 passed from between the right and left handlebars 177, 178 through the handle supporting plate 176 is screwed into the female thread 203, so that the head part 182a of the handle fixing bolt 182 is covered by a pair of right and left handlebars 177, 178 and is hardly seen and even if there is not provided a cover covering the head part 182a of the handle fixing bolt 182, in particular, its outer appearance characteristic can be improved more and further the handlebar fixing part can have a simple structure and its cost can be restricted.

Further, when the spacer 164 at the handle supporting plate 176 is set in its position with the convex parts 207, 208 at the upper end of the steering stem 13, the convex parts 207, 208 are not exposed out and the outer appearance characteristic of the handlebar fixing part can be improved more.

Secondly, the present invention is characterized in that the position setting part is set as either the concave parts or convex parts 207, 208 to be fitted to the handle supporting plate 176.

Since the position setting part is set as the spacer 174 at the handle supporting plate 176, more particularly the convex parts 207, 208 fitted to the concave parts 205, 206, fitting of the steering stem 13 to the spacer 174 at the handle supporting plate 176 through concave parts or convex parts enables a connecting strength to be increased even though a simple handlebar fixing structure is applied.

As already been illustrated in Figs. 8A and 8B, although the convex parts 207, 208 are arranged at the steering stem 13 (refer to Fig. 6), i.e. at the nut member 183 and the concave parts 205, 206 are arranged at the spacer 174, the present invention is not limited to this arrangement and the concave part may be arranged at the nut member 183 and the convex part may be set at the spacer 174.

The vehicle handlebar fixing structure of the embodiment is preferable for a three-wheeled vehicle or a four-wheeled vehicle.

### (Output Shaft Supporting Structure for Vehicle)

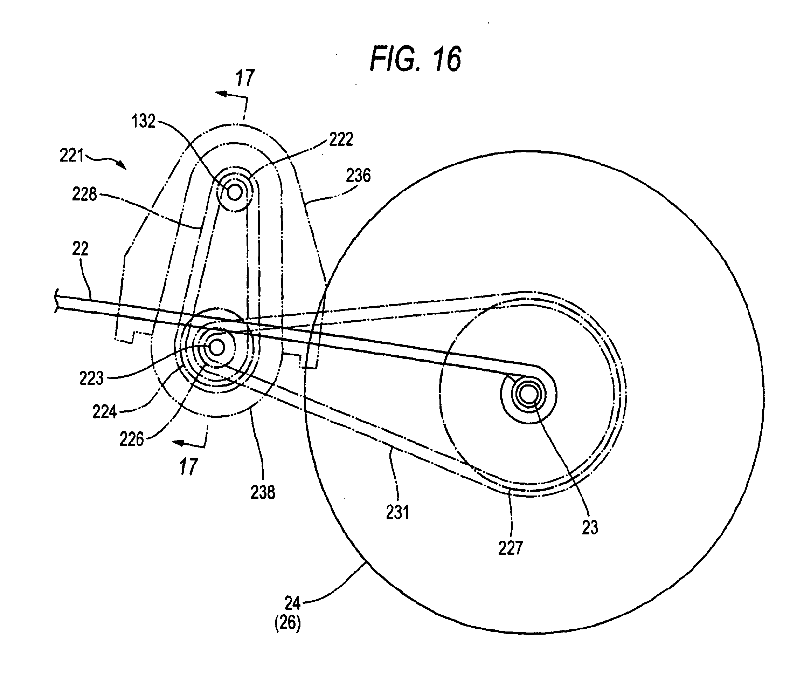

Fig. 16 is a side elevational view for showing another preferred embodiment of a power transmission mechanism of a vehicle in accordance with the present invention to indicate a structure for transmitting a power from the engine 27 (refer to Fig. 2) to the rear wheels 24, 26. The same constitution as that of the preferred embodiment shown in Fig. 2 is denoted by the same reference numerals and its detailed description will be eliminated.

A power transmission mechanism 221 comprises a drive sprocket 222 fixed to an output shaft 132 of the engine 27, an intermediate shaft 223 arranged below the output shaft 132, a first central sprocket 224 and a second central sprocket 226 fixed to the intermediate shaft 223, a driven sprocket 227 fixed to a wheel shaft 23 of the rear wheels 24, 26, a first chain 228 applied between the drive sprocket 222 and the first central sprocket 224, and a second chain 231 applied between the second central sprocket 226 and the driven sprocket 227.

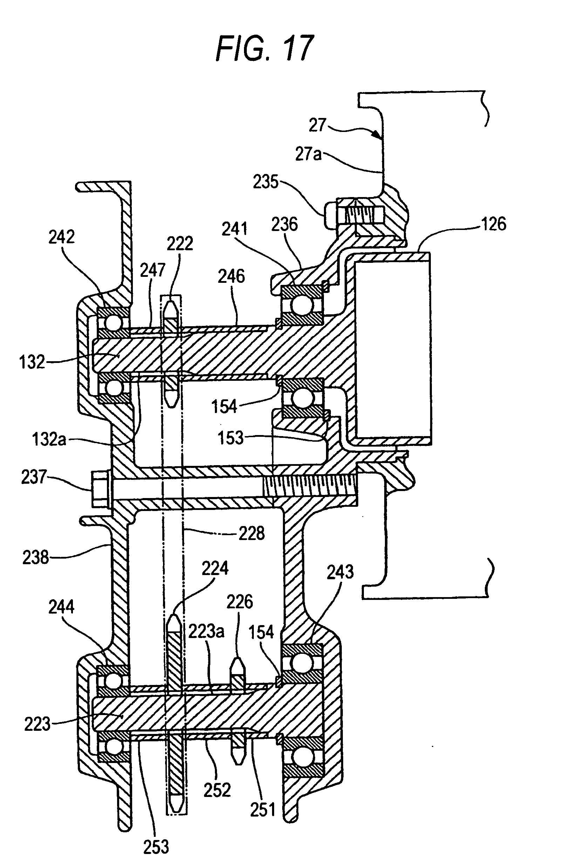

Fig. 17 is a sectional view taken along line 17-17 of Fig. 16 and this figure shows that a bearing 236 is fixed to the case 27a of the engine 27 with small screws 235 ...; a shaft end receiving part 238 is fixed to the bearing 236 with bolts 237 ... ; the output shaft 132 is rotatably attached to these bearing 236 and the shaft end receiving part 238 through bearings 241, 242 and at the same time an intermediate shaft 223 is rotatably attached to the bearing 236 and the shaft end receiving part 238 through bearings 243, 244; and a drive sprocket 222 is connected in spline to the output shaft 132 while being position set with collars 246, 247. Further, reference numeral 223a denotes a male spline formed at the intermediate shaft 223 for connecting in spline the first central sprocket 224 and the second central sprocket 226.

Returning to Fig. 16, arrangement of the intermediate shaft 223 at the power transmission mechanism 221 enables the intermediate shaft 223 to approach to or coincide with the swing arm 22 in an upward or downward direction, for example, even when the vehicle body frame 11 (refer to Fig. 1) oscillates in a lateral direction during turning operation of the vehicle and the swing arm 22 is twisted, it is possible to reduce a relative inclination between the second central sprocket 226 and the driven sprocket 227 and to perform an efficient power transmission.

As already been described in reference to the aforesaid Figs. 2 and 5, the present invention is the vehicle 10 (refer to Fig. 1) in which at first the output shaft 132 is arranged at one end of the crank shaft (the crank shaft) 121 of the engine 27 through a centrifugal clutch 127 acting as a clutch, the chain 28 is applied over the drive sprocket 72 arranged at the output shaft 132 and the wheel shaft 23 for the rear wheels 24, 26 acting as wheels so as to drive the rear wheels 24, 26 characterized in that the output shaft 132 is supported at both sides of the drive sprocket 72 through bearings (bearings) 131, 135.

Even if the output shaft 132 is short in its length, the output shaft 132 is supported at both sides of the drive sprocket 72, so that the output shaft 132 can be rigidly supported. Accordingly, this output shaft supporting structure can accommodate for a large output and when the outputs are similar to each other, it is possible in the present invention to reduce more an outer diameter of the output shaft 132 as compared with a cantilevered output shaft and to make a small-sized and light weight formation of the engine 27 acting as a driving source.

In addition, since the shaft end receiving part 134 for supporting the end of the output shaft 132 covers an outside part of the drive sprocket 72, the drive sprocket 72 is hardly seen from the side part of the vehicle to enable an outer appearance characteristic of the vehicle 10 to be improved and at the same time it can be functioned as a cover for protecting the drive sprocket 72.

As already been described in reference to Figs. 16 and 17, secondly, the present invention is characterized in that the intermediate shaft 223 is arranged below the output shaft 132, the first central sprocket 224 and the second central sprocket 226 are attached to the intermediate shaft 223, a chain is constituted by the first chain 228 and a second chain 231 separate from the first chain 228, the first chain 228 is applied over the drive sprocket 222 and the first central sprocket, and the second chain 231 is applied over the second central sprocket 226 and the driven sprocket 227.

Since the intermediate shaft 223 is arranged near the output shaft 132, changing the position of the intermediate shaft 223 enables a degree of freedom of a power transmission path ranging from the output shaft 132 to the wheel shaft 23 to be increased. In addition, the number of teeth of the first central sprocket 224 and the second central sprocket 226 is changed to enable a degree of freedom of a transmission ratio between the output shaft 132 and the wheel shaft 23 to be increased.

Thirdly, as already been described in reference to Fig. 5, the present invention is characterized in that the crank shaft 121 and the output shaft 132 are arranged on the same axis.

Since the crank shaft 121 and the output shaft 132 are arranged on the same axis, the centrifugal clutch 127 can be easily installed between these members, for example, the present invention does not require any plural number of gears or sprocket for use in connecting the crank shaft to the output shaft as found in such a state as one in which the crank shaft and the output shaft are not arranged on the same axis and so its cost can be restricted.

Fourthly, as already been described in Figs. 2 and 16, the present invention is characterized in that the engine 27 is arranged on the swing arm 22 supporting the wheel shaft 23 at one end and the intermediate shaft 223 is arranged nearer the swing arm 22 than the output shaft 132.

Since the intermediate shaft 223 is arranged nearer the swing arm 22 than the output shaft 23, it is possible to reduce a relative inclination between the second central sprocket 226 at the intermediate shaft 223 and the driven sprocket 227 at the wheel shaft 23 even if the swing arm 22 is twisted during running of the vehicle, so that the power transmission can be efficiently carried out.

Further, as shown in Fig. 5, although the bearing part 128 supporting the output shaft 132 and the shaft receiving part 134 are separately made in the preferred embodiment, they are not restricted to this form, but they may be integrally assembled.

The vehicle output shaft supporting structure of the embodiment is preferable for the engine and an output shaft of a transmission machine installed in a motorcycle, a three-wheeled vehicle or a four-wheeled vehicle.

## Claims

1. A vehicle in which a front fork is attached to a head pipe in such a way that it enables to be steered, a front wheel is attached to a lower end of the front fork, and one vehicle body frame is extended from the head pipe in a rearward direction,
wherein the vehicle body frame has a shape as seen from a side elevational view with an S-shape being laid in a forward or rearward direction of the vehicle, both a foot-straddling part and a foot-mounting part are arranged at a front arcuate part downward-protruded and installed at a front half part of the S-shape of the vehicle body frame, and an engine is arranged in a space below a rear arcuate part upward-protruded and installed at a rear half part of the S-shape of the vehicle body frame.

2. The vehicle according to claim 1,
wherein the engine is fixed to a swing arm extending substantially from an intermediate part of the S-shape of the vehicle body frame in a rearward direction.

3. The vehicle according to claim 1 or claim 2,
wherein the front arcuate part and the rear arcuate part have the same radius of curvature.

4. The vehicle according to claim 1, claim 2 or claim 3,
wherein the vehicle body frame is configured from a rectangular pipe.

5. The vehicle according to claim 2
wherein a stopper against which the swing arm abuts is provided at a rear end of the S-shape of the vehicle body frame.

6. The vehicle according to claim 1,
wherein a swing arm is attached to the vehicle body frame in such a way that it enables to be swung in an upward or downward direction, a wheel shaft is attached to an end of the swing arm, and a wheel is attached to the wheel shaft, and
wherein the swing arm is a leaf spring, a part near a fixing part thereof to the vehicle body frame is supported from above and below by a supporting member, and the swing arm has a function of a suspension spring.

7. The vehicle according to claim 6
wherein the supporting member is a tubular bushing having an inner cylinder, an outer cylinder and a rubber provided between the inner cylinder and the outer cylinder.

8. The vehicle according to claim 2
wherein the engine for driving the wheels is installed on the swing arm.

9. The vehicle according to claim 2
wherein a stopper for stopping an upward swing of the swing arm is provided at a rear end of the vehicle body frame.

10. The vehicle according to any of the preceding claims,
wherein a steering stem is rotatably attached to a head pipe, the front fork is attached to a lower end of the steering stem in such a way that it enables to be steered, the front wheel is attached to the lower end of the front fork, and a handle is fixed to an upper end of the steering stem, and
wherein a female thread and a position setting part are provided at the upper end of the steering stem, the handle includes a pair of right and left handlebars connected by a connector member, and the handle is fixed to the upper end of the steering stem by setting a position of the connector member at the position setting part and by screwing a piece of bolt, which passes through the connector member from between the right and left handlebars, into the female thread.

11. The vehicle according to claim 10,
wherein the position setting part is either a concave part or a convex part which fits to the connector member.

12. The vehicle according to any of the preceding claims,
wherein an output shaft is arranged at one end of a crank shaft of the engine through a clutch, and a chain is applied between a drive sprocket arranged at the output shaft and a driven sprocket arranged at the wheel shaft of the wheels to drive the wheels, and
wherein the output shaft is supported at both sides of the drive sprocket through bearings.

13. The vehicle according to claim 12 ,
wherein an intermediate shaft is arranged below the output shaft, a first central sprocket and a second central sprocket are attached to the intermediate shaft, the chain includes a first chain and a second chain separate from the first chain, the first chain is applied over the drive sprocket and the first central sprocket, and the second chain is applied over the second central sprocket and the driven sprocket.

14. The vehicle according to claim 12 or 13,
wherein the crank shaft and the output shaft are arranged on the same axis.

15. The vehicle according to claim 13,
wherein the engine is installed on a swing arm supporting the wheel shaft at one end, and the intermediate shaft is arranged nearer the swing arm than the output shaft.

## Patentansprüche

1. Fahrzeug, bei welchem eine Vordergabel an einem Kopfrohr derartig angebracht ist, dass ihm ermöglicht wird, gelenkt zu werden, wobei ein Vorderrad an einem unteren Ende der Vordergabel angebracht ist, und wobei sich ein Fahrzeugkörperrahmen von dem Kopfrohr in einer nach hinten gerichteten Richtung erstreckt,
wobei der Fahrzeugkörperrahmen von einer Seitenaufrissansicht gesehen eine Form mit einer S-Form, welche in eine nach vorne und nach hinten gerichtete Richtung des Fahrzeugs gelegt ist, aufweist, wobei sowohl ein Fussspreitzteil als auch ein Fussmontageteil an einem nach unten' hervorragenden gebogenen Vorderteil angeordnet sind, und an einem vorderen Halbteil der S-Form des Fahrzeugkörperrahmens eingebaut sind, und wobei ein Motor in einem Raum unterhalb eines nach oben hervorragenden gebogenen hinteren Teils angeordnet ist, und an einem hinteren Halbteil der S-Form des Fahrzeugkörperrahmens installiert ist.

2. Das Fahrzeug gemäß Anspruch 1,
wobei der Motor an einem Schwingarm befestigt ist, welcher sich im Wesentlichen von einem intermediären Teil der S-Form des Fahrzeugkörperrahmens in einer nach hinten gerichteten Richtung erstreckt.

3. Das Fahrzeug gemäß Anspruch 1 oder Anspruch 2,
wobei das gebogene Vorderteil und das gebogene Hinterteil den gleichen Krümmungsradius aufweisen.

4. Das Fahrzeug gemäß Anspruch 1, Anspruch 2 oder Anspruch 3, wobei der Fahrzeugkörperrahmen aus einem rechteckigen Rohr aufgebaut ist.

5. Das Fahrzeug gemäß Anspruch 2,
wobei ein Anschlag, gegen welchen der Schwingarm anschlägt, an einem hinteren Ende der S-Form des Fahrzeugkörperrahmens vorgesehen ist.

6. Das Fahrzeug gemäß Anspruch 1,
wobei ein Schwingarm an dem Fahrzeugkörperrahmen derartig angebracht ist, dass ihm ermöglicht wird, in einer nach oben und nach unten gerichteten Richtung geschwungen zu werden, wobei eine Radwelle an einem Ende des Schwingarms angebracht ist, und ein Rad an der Radwelle angebracht ist, und
wobei der Schwingarm eine Blattfeder ist, wobei ein Teil nahe eines Befestigungsteils desselben an den Fahrzeugkörperrahmen von oben und von unten durch ein Trägerelement getragen wird, und wobei der Schwingarm eine Funktion einer Tragfeder hat.

7. Das Fahrzeug gemäß Anspruch 6,
wobei das Trägerelement eine röhrenförmige Buchse ist, welche einen inneren Zylinder, einen äußeren Zylinder und einen Gummi aufweist, welcher zwischen dem inneren Zylinder und dem äußeren Zylinder vorgesehen ist.

8. Das Fahrzeug gemäß Anspruch 2,
wobei der Motor zum Antreiben der Räder auf dem Schwingarm installiert ist.

9. Das Fahrzeug gemäß Anspruch 2,
wobei ein Anschlag zum Stoppen eines nach oben Schwingens des Schwingarms an einem hinteren Ende des Fahrzeugkörperrahmens vorgesehen ist.

10. Das Fahrzeug gemäß irgendeinem der vorhergehenden Ansprüche,
wobei ein Lenkschaft drehbar an einem Kopfrohr angebracht ist, wobei die Vordergabel an einem unteren Ende des Lenkschafts auf solch eine Weise angebracht ist, dass ihm ermöglicht wird, gelenkt zu werden, wobei das Vorderrad an dem unteren Ende der Vordergabel angebracht ist, und ein Griff an einem oberen Ende des Lenkschafts fixiert ist, und
wobei ein Innengewinde und ein Positionseinstellteil an dem oberen Ende des Lenkschafts vorgesehen sind, wobei der Griff ein Paar von rechten und linken Griffstangen enthält, welche durch ein Verbindungselement verbunden sind, und der Griff an dem oberen Ende des Lenkschafts durch Einstellen einer Position des Verbindungselements an dem Positionseinstellteil fixiert ist und durch Schrauben eines Stücks eines Bolzens, welcher durch das Verbindungselement von zwischen der rechten und der linken Griffstange hindurchgeführt ist, in das Innengewinde.

11. Das Fahrzeug gemäß Anspruch 10,
wobei das Positionseinstellteil entweder ein konkaves Teil oder ein konvexes Teil ist, welches zu dem Verbindungselement passt.

12. Das Fahrzeug gemäß irgendeinem der vorhergehenden Ansprüche,
wobei eine Ausgangswelle an einem Ende einer Kurbelwelle des Motors durch eine Kupplung angeordnet ist, und eine Kette zwischen einem Antriebskettezahnrad, welches an der Ausgangswelle angeordnet ist, und einem Abtriebskettenzahnrad eingesetzt ist, welches an der Radwelle der Räder angeordnet ist, um die Räder anzutreiben, und
wobei die Ausgangswelle an beiden Seiten des Antriebskettenzahnrads durch Lager getragen ist.

13. Das Fahrzeug gemäß Anspruch 12,
wobei eine intermediäre Welle unterhalb der Ausgangswelle angeordnet ist,
wobei ein erstes zentrales Kettenzahnrad und ein zweites zentrales Kettenzahnrad an der intermediären Welle angeordnet sind, wobei die Kette eine erste Kette und eine zweite Kette enthält, welche von der ersten Kette getrennt ist, wobei die erste Kette über dem Antriebskettenzahnrad und dem ersten zentralen Kettenzahnrad eingesetzt ist und die zweite Kette über dem zweiten zentralen Kettenzahnrad und dem Abtriebskettenzahnrad eingesetzt ist.

14. Das Fahrzeug gemäß Anspruch 12 oder 13,
wobei die Kurbelwelle und die Ausgangswelle auf der gleichen Achse angeordnet sind.

15. Das Fahrzeug gemäß Anspruch 13, wobei der Motor auf einem Schwingarm installiert ist, welcher die Radwelle an einem Ende trägt, und wobei die intermediäre Welle näher an dem Schwingarm als die Ausgangswelle angeordnet ist.

## Revendications

1. Véhicule dans lequel une fourche avant est fixée à un tube de tête de manière à permettre la direction de celui-ci, une roue avant est fixée à une extrémité inférieure de la fourche avant, et un châssis de carrosserie s'étend à partir du tube de tête vers l'arrière,
dans lequel le châssis de carrosserie est en forme de S, selon une vue de côté en élévation, dans le sens avant ou arrière du véhicule, avec à la fois une pièce d'enjambement de pied et une pièce de support de pied positionnées au niveau d'une pièce arquée avant faisant saillie vers le bas et correspondant à une demi-pièce avant du S composant le châssis de carrosserie, et dans lequel un moteur est logé dans un espace situé sous une pièce arquée arrière faisant saillie vers le haut et correspondant à une demi-pièce arrière du S composant le châssis de carrosserie.

2. Véhicule selon la revendication 1,
dans lequel le moteur est fixé à un bras oscillant s'étendant sensiblement à partir d'une pièce intermédiaire du S composant le châssis de carrosserie vers l'arrière.

3. Véhicule selon la revendication 1 ou la revendication 2,
dans lequel la pièce arquée avant et la pièce arquée arrière ont le même rayon de courbure.

4. Véhicule selon la revendication 1, la revendication 2 ou la revendication 3,
dans lequel le châssis de carrosserie est configuré à partir d'un tube rectangulaire.

5. Véhicule selon la revendication 2,
dans lequel une butée contre laquelle aboute le bras oscillant est prévue au niveau d'une extrémité arrière du S composant le châssis de carrosserie.

6. Véhicule selon la revendication 1,
dans lequel un bras oscillant est fixé au châssis de carrosserie de telle façon qu'il puisse pivoter vers le haut ou vers le bas, un essieu est fixé à une extrémité du bras oscillant, et une roue est fixée à l'essieu, et
dans lequel le bras oscillant est un ressort à lames, dont une pièce proche d'une partie de fixation au châssis de carrosserie est supportée du dessus et du dessous par un élément support, et le bras oscillant remplit la fonction d'un ressort de suspension.

7. Véhicule selon la revendication 6,
dans lequel l'élément support est une douille tubulaire ayant un cylindre interne, un cylindre externe et un caoutchouc disposé entre le cylindre interne et le cylindre externe.

8. Véhicule selon la revendication 2,
dans lequel le moteur servant à l'entraînement des roues est installé sur le bras oscillant.

9. Véhicule selon la revendication 2,
dans lequel une butée permettant de bloquer le pivotement du bras oscillant vers le haut est prévue à une extrémité arrière du châssis de carrosserie.

10. Véhicule selon l'une quelconque des revendications précédentes,
dans lequel une tige de direction est montée à rotation sur un tube de tête, la fourche avant est fixée à une extrémité inférieure de la tige de direction pour permettre la direction de celle-ci, la roue avant est fixée à l'extrémité inférieure de la fourche avant, et un guidon est fixé à une extrémité supérieure de la tige de direction, et
dans lequel un filetage femelle et une pièce de réglage de position sont prévus au niveau de l'extrémité supérieure de la tige de direction, le guidon inclut une paire de poignées droite et gauche connectées par un élément de connexion, et le guidon est fixé à l'extrémité supérieure de la tige de direction après réglage de la position de l'élément de connexion au niveau de la pièce de réglage de position et après vissage d'un boulon passant à travers l'élément de connexion, d'entre les poignées droite et gauche vers le filetage femelle.

11. Véhicule selon la revendication 10,
dans lequel la pièce de réglage de position est soit une pièce concave soit une pièce convexe épousant la forme de l'élément de connexion.

12. Véhicule selon l'une quelconque des revendications précédentes,
dans lequel un arbre de sortie est prévu en une extrémité d'un vilebrequin du moteur par l'intermédiaire d'un embrayage, et une chaîne est appliquée entre un pignon d'entraînement prévu au niveau de l'arbre de sortie et un pignon mené disposé sur l'essieu des roues permettant d'entraîner les roues, et
dans lequel l'arbre de sortie est supporté des deux côtés du pignon d'entraînement par des roulements.

13. Véhicule selon la revendication 12,
dans lequel un arbre intermédiaire est disposé sous l'arbre de sortie, un premier pignon central et un second pignon central sont fixés à l'arbre intermédiaire, la chaîne comporte une première chaîne et une seconde chaîne séparée de la première chaîne, la première chaîne est appliquée sur le pignon d'entraînement et le premier pignon central, et la seconde chaîne est appliquée sur le second pignon central et le pignon mené.

14. Véhicule selon la revendication 12 ou 13,
dans lequel le vilebrequin et l'arbre de sortie sont disposés sur le même axe.

15. Véhicule selon la revendication 13,
dans lequel le moteur est installé sur un bras oscillant supportant l'essieu à une extrémité, et l'arbre intermédiaire est disposé plus près du bras oscillant que l'arbre de sortie.
